# EUROPEAN PATENT APPLICATION

(11) **EP 2 070 779 A1**
(43) Date of publication of application: **17.06.2009**
(21) Application number: 07806891.3
(22) Date of filing: 31.08.2007
(51) Int. Cl.: B60R 22/40, B60R 22/36

(54) **SEATBELT RETRACTOR AND SEATBELT DEVICE USING THE SAME**

(30) Priority: 28.09.2006 JP 2006265331
(71) Applicant: Takata Corporation, Tokyo 106-8510 (JP)
(72) Inventor: YOSHIOKA, Hirokazu, Tokyo 1068510 (JP)
(74) Representative: Banzer, Hans-Jörg
(86) International application number: PCT/JP2007/067450
(87) International publication number: WO 2008/038505

(57) **Abstract**

A seat belt retractor of the present invention is provided with a stopper (16). When a cam follower (16a (*sic*)) of the stopper (16) is located in an arcuate retraction groove portion (22a) or a linear groove portion (22b) of a cam groove (22), a seat belt (4) is withdrawn by an amount exceeding a predetermined amount for the normal belt wearing. A stopper portion (16b) of the stopper (16) is located at an engagement allowing position (B) so as to allow engagement between ratchet teeth (27) of a locking gear (26) and an engaging pawl (24d) of a vehicle sensor (24). When the cam follower (16a (*sic*)) is located in an arcuate protraction groove portion (22c) of the cam groove (22), the maximum amount of the seat belt (4) is wound. The stopper portion (16b) of the stopper (16) is located at an engagement preventing position (A) so as to prevent the engagement between the ratchet teeth (27) and the engaging pawl (24d), thereby preventing end lock.

## Description

### BACKGROUND ART

The present invention relates to a technical field of a seat belt retractor and a seat belt apparatus employing the same which is installed in a vehicle such as an automobile and is adapted to restrain an occupant with a seat belt withdrawn from the seat belt retractor, wherein the seat belt retractor has a function of preventing an occurrence of end lock and has at least an emergency locking function.

Conventionally, seat belt apparatuses are installed in vehicles such as automobiles. In the event of an emergency such as a vehicle collision where a large deceleration acts on the vehicle, such a seat belt apparatus restrains an occupant with a seat belt thereof so as to prevent the occupant from jumping out of the seat.

Generally, the seat belt apparatus is provided with a seat belt retractor. As the seat belt retractor, a seat belt retractor having a function as an emergency locking type seat belt retractor (ELR) capable of locking the seat belt from being withdrawn and a function as an automatic locking type seat belt retractor (ALR) which is activated when the seat belt is maximally withdrawn so as to prevent the seat belt from being withdrawn while the seat belt is wound and cancels its function when the winding of the seat belt is completed has been known by JP2001-213275A.

The seat belt retractor disclosed in JP2001-213275A comprises as basic components, similarly to a typical seat belt retractor having the ELR function and the ALR function, a U-like frame, a belt reel and a shaft (spool) which is rotationally supported between left and right walls of the frame to wind up a seat belt, a biasing means comprising a spiral spring which is attached to one of the walls of the frame to apply winding force of the seat belt to the spool, a locking pawl as a locking member which is attached to the other wall of the frame (*sic*) and which can be engaged with ratchet teeth formed in the frame to prevent the spool from rotating in the belt withdrawing direction, a ratchet wheel (locking gear) which has ratchet teeth formed around the outer periphery thereof and which rotate together with the spool during normal operation and is stopped from rotating in the belt withdrawing direction in the event of an emergency, where a large deceleration exceeding a predetermined value acts on a vehicle, so as to cause a rotational difference relative to the spool, an acceleration detecting means (vehicle sensor) which is provided at its tip end with an engaging pawl, wherein when a large deceleration is sensed by an inertia body in the event of an emergency as mentioned above, a lever (actuator) is moved so that the engaging pawl at its tip end is engaged with the ratchet teeth of the locking gear so as to stop the rotation in the belt withdrawing direction of the locking gear, the inertia body which is pivotally supported on the locking gear and has an engaging pawl, a member which is attached to the frame and has ratchet teeth with which the engaging pawl of the inertia body can be engaged, an internally-toothed ring (ring gear) which has internal teeth which are formed, coaxially with the spool, in a retainer attached to the other side wall of the frame, an eccentric disc which rotates together with the spool eccentrically from the center of the spool, a control ring which is controlled to rotate at a reduced speed by the eccentric disc and which has external teeth which mesh with the internal teeth of the ring gear, and an ALR lever for exhibiting the ALR function which is controlled by the control ring to operate to switch from the ELR function to the ALR function when the seat belt is maximally withdrawn and cancels the ALR function when the seat belt is maximally wound so as to switch from the ALR function to the ELR function.

The seat belt retractor exhibits the ELR function when the seat belt is withdrawn within a range before the seat belt is maximally withdrawn. In the ELR function, the vehicle sensor is actuated when a large deceleration as mentioned above acts on the vehicle. That is, the inertia body senses the deceleration to move the actuator. Because of the movement of the actuator, the engaging pawl of the actuator is engaged with the ratchet teeth of the locking gear so as to lock the rotation in the belt withdrawing direction of the locking gear. Then, a rotational difference is caused between the spool which is about to rotate in the belt withdrawing direction due to inertia acting on the occupant and the locking gear of which rotation in the belt withdrawing direction is locked. By the rotational difference, the locking pawl (corresponding to the locking means of the present invention) operates to engage the ratchet teeth of the frame so as to prevent the spool from rotating in the belt withdrawing direction. Therefore, the seat belt is stopped from being withdrawn so that the occupant is prevented from moving forward due to the inertia, thereby restraining the occupant with the seat belt.

As the seat belt is withdrawn rapidly at a speed higher than that for normal withdrawal, the seat belt sensor is actuated. That is, since the locking gear is rapidly rotated by the rapid withdrawal of the seat belt, the inertia body is moved. Since the engaging pawl of the inertia body is then engaged with the ratchet teeth, the rotation in the belt withdrawing direction of the locking gear is prevented. Accordingly, similarly to the case where the vehicle sensor, the rotation in the belt withdrawing direction of the spool is locked, thereby preventing the withdrawal of the seat belt.

For example, to activate the ALR function for fixing a child seat to a vehicle seat, the seat belt is maximally withdrawn. Then, the control ring of the automatic locking mechanism (ALR mechanism) detects the maximum withdrawal of the seat belt according to the eccentric rotation thereof so as to move the ALR lever, thereby switching the seat belt retractor from the ELR function to the ALR function. In the ALR function, the rotation in the belt withdrawing direction of the spool is locked by the action of the ALR function so that it is impossible to withdraw the seat belt until the seat belt is maximally wound. As the seat belt is maximally (completely) wound, the ALR lever cancels the ALR function so that the seat belt retractor returns to the ELR function from the ALR function.

On the other hand, when the occupant cancels the latching of the buckle with the tongue and lets off the tongue or the seat belt, the seat belt is suddenly wound by the spool which is biased in the winding direction. As the seat belt is completely wound, the rotation of the spool is suddenly stopped so that the actuator of the vehicle sensor may pivotally move, whereby the engaging pawl thereof sometimes engaged with the ratchet teeth of the locking gear. Since the spool is therefore locked from rotating in the belt withdrawing direction as mentioned above, it is impossible to withdraw the seat belt again. That is, an end lock sometimes occurs.

To avoid this, a circular pressing portion (stopper) is formed on the outer periphery of a substantially disk-like cam plate capable of performing the ALR function. By the decelerated rotation of the cam plate according to the rotation of the spool, the stopper moves in the rotational direction of the locking gear between an engagement allowing position where the engaging pawl of the vehicle sensor is allowed to be engaged with the ratchet teeth of the locking wheel (locking gear) and an engagement preventing position where the engaging pawl of the vehicle sensor is prevented from being engaged with the ratchet teeth of the locking gear. The stopper is set at the engagement preventing position where the maximum amount or substantially the maximum amount of the seat belt is wound by the spool. The seat belt retractor having the aforementioned structure has been proposed by JPH09-150712A.

According to the seat belt retractor disclosed in JPH09-150712A, the stopper is set at the engagement preventing position when the seat belt is maximally wound so that the engaging pawl of the vehicle sensor is prevented from being engaged with the ratchet wheel of the locking gear. Therefore, occurrence of end lock by the engaging pawl of the vehicle sensor can be prevented.

In the seat belt retractor disclosed in JPH09-150712A, however, the stopper is formed on the outer periphery of the cam plate for performing the ALR function and rotates together with the cam plate. Since the stopper is therefore located in an area between the ratchet teeth of the locking gear and the engaging pawl of the vehicle sensor and can pass through this area, the cam plate should be large. In addition, because of the large cam plate, the rotational track of the outer periphery of the cam plate is also large, requiring a large moving space. Further, when the stopper passes through the space between the ratchet teeth of the locking gear and the engaging pawl of the vehicle sensor, the distance between the engaging pawl and the ratchet teeth should be longer than that of a conventional ELR mechanism in order to prevent the stopper from interfering with the movement of the engaging pawl in the rotational direction. Because of the aforementioned reasons, the seat belt retractor disclosed in JPH09-150712A is inevitably large.

In addition, since the distance between the engaging pawl and the ratchet teeth is long, the moving distance of the engaging pawl between the inoperative position and the operative position is also long so that the vehicle sensor is also inevitably large.

Moreover, because of diversification of recent vehicles, the layout of seat belt apparatuses to be installed in vehicles becomes diverse. In this case, the combination of the operation range of the cam plate and the operation range of the stopper generally depends on the layout of the seat belt apparatus. In the seat belt retractor disclosed in JPH09-150712A, however, the stopper for preventing the engaging pawl from being engaged with the ratchet teeth at the completion of the belt winding and the cam plate for performing the ALR function are formed integrally, that is, composed of a single part. For adapting the seat belt retractor disclosed in JPH09-150715A to various layouts of seat belt apparatuses, each exclusive part composing the stopper and the cam plate is required for each layout because the stopper and the cam plate are formed integrally, i.e. composed of a single part. That is, exclusive parts of which number is equal to the number of layouts are required, thus not only increasing the number of kinds of parts but also increasing the cost. For example, if there are nine kinds of mounting layouts of seat belt apparatuses, nine kinds of exclusive parts corresponding to combinations of different operation ranges of the cam plate and different operation ranges of the stopper are required.

### DISCLOSURE OF THE INVENTION

It is an object of the present invention to provide a seat belt retractor which can effectively prevent an end lock due to an engaging pawl of a vehicle sensor and of which structure for preventing the end lock has a reduced size and to provide a seat belt apparatus employing the seat belt retractor.

It is another object of the present invention to provide a seat belt retractor which can be flexibly and inexpensively adapted to various mounting layouts with less kind of parts corresponding to the combination of an ALR function and an end lock preventive device and to provide a seat belt apparatus employing the seat belt retractor.

For achieving the object, a seat belt retractor according to the present invention comprises at least: a spool onto which a seat belt is wound; a locking means which allows the rotation of said spool when it is not in operation and prevents the rotation of said spool in the belt withdrawing direction when it is in operation; a locking gear which has annular ratchet teeth around its outer periphery and which rotates together with said spool when it is not in operation and actuates said locking means when it is in operation because a rotational difference relative to said spool is caused, and a vehicle sensor which has an engaging pawl and which detects a deceleration in the event of an emergency where the deceleration which is larger than that for the normal running acts on a vehicle and engages said engaging pawl to the ratchet teeth of said locking gear to prevent the rotation in the belt withdrawing direction of said locking gear so as to cause the rotational difference between said spool and said locking gear, and is characterized by in that a stopper is provided in such a manner that said stopper is movable in the radial direction of said locking gear according to the rotation of said spool between an engagement allowing position where said engaging pawl of said vehicle sensor is allowed to be engaged with said ratchet teeth of the locking gear and an engagement preventing position where said engaging pawl of said vehicle sensor is prevented from being engaged with said ratchet teeth of said locking gear, and that when the maximum amount or substantially the maximum amount of said seat belt is wound onto said spool, said stopper is set to said engagement preventing position.

A seat belt retractor according to the present invention is characterized by further comprising: a stopper control disk having a cam groove for controlling the movement of said stopper when rotating, and a control member which is actuated by the rotation of said spool to rotate said stopper control disk.

A seat belt retractor according to the present invention is characterized by further comprising: an automatic locking mechanism which is activated when the maximum amount of said seat belt is withdrawn so as to prevent the withdrawal of said seat belt in the course of winding said seat belt after the withdrawal of the maximum amount until the maximum amount of said seat belt is wound, wherein a control member of said automatic locking mechanism is used also as said control member.

Furthermore, a seat belt apparatus according to the present invention comprises at least: a seat belt for restraining an occupant; a seat belt retractor which wind up said seat belt while allowing the withdrawal of said seat belt and is actuated in the event of an emergency to prevent the withdrawal of said seat belt; a tongue slidably supported by said seat belt withdrawn from said seat belt retractor; and a buckle which is attached to a vehicle body or a vehicle seat and to which said tongue can be detachably latched, and is **characterized in that** said seat belt retractor is any one of seat belt retractors of the present invention.

According to the seat belt retractor and the seat belt apparatus of the present invention having the aforementioned structure, since the stopper for the end lock preventive device is adapted to be movable in the radial direction of the locking gear between the engagement allowing position and the engagement preventing position, it is only required to set such that the trajectory of the stopper contains the position where the engaging pawl of the vehicle sensor is engaged with the ratchet teeth of the locking gear. Therefore, the trajectory of the stopper can be reduced so as to require reduced space for movement. Moreover, since the stopper is adapted to move simply linearly in the radial direction of the locking gear so that the stopper does not pass between the ratchet teeth and the engaging pawl while rotating in the rotational direction of the locking gear, the stopper never interrupt the engaging pawl in the rotational direction of the locking gear. Accordingly, the distance between the engaging pawl and the ratchet teeth may be the same as a conventional ELR, that is, not necessary to be changed. Therefore, the seat belt retractor of this embodiment can be made in a compact size even with the end lock preventive device.

In addition, the distance between the engaging pawl and the ratchet teeth is equal to that of a conventional ELR or ALR which has no end lock preventive device for preventing the end lock due to the vehicle sensor so that the moving distance of the engaging pawl between the inoperative position and the operative position is not changed, thereby preventing the increase in size of the vehicle sensor.

Further, according to the present invention, since the stopper control disk is rotated by the control member which is moved by the rotation of the spool, the operation of the stopper is control led by the cam groove of the stopper control disk, thereby more stably preventing the end lock with simple structure.

Furthermore, the control member of the automatic locking mechanism also functions as a control member rotating the stopper control disk, thereby eliminating necessity of a control member exclusive for controlling the stopper. Therefore, in the seat belt retractor of the automatic locking type, the number of parts can be further reduced even with the end lock preventive device.

Moreover, since the stopper control disk for controlling the stopper for the end lock preventive device and the control member of the automatic locking mechanism are separately formed as discrete parts, the seat belt retractor can be flexibly and inexpensively adapted to various layouts with parts of less kinds by combining the stopper control disk and the control ring which are discrete parts even when there are various layouts of the seat belt apparatuses.

### BRIEF DESCRIPTION OF THE DRAWINGS

Fig. 1 is a perspective view schematically showing a seat belt apparatus comprising a seat belt retractor as an embodiment according to the present invention.
Fig. 2 is an exploded perspective view showing parts of the seat belt retractor comprising an end lock preventive device of the embodiment shown in Fig. 1, taken in one direction.
Fig. 3 is an exploded perspective view of the same parts as shown in Fig. 2 but taken in an opposite direction of the seat belt retractor of the embodiment shown in Fig. 1.
Fig. 4 is a side view of the seat belt retractor of the embodiment shown in Fig. 1.
Fig. 5 is a sectional view taken along a line V-V in Fig. 4.
Fig. 6 is a perspective view showing a stopper control disk used in the end lock preventive device of the embodiment shown in Fig. 1.

### BEST MODE FOR CARRYING OUT THE INVENTION

Hereinafter, a best mode for carrying out the present invention will be described with reference to the attached drawings.

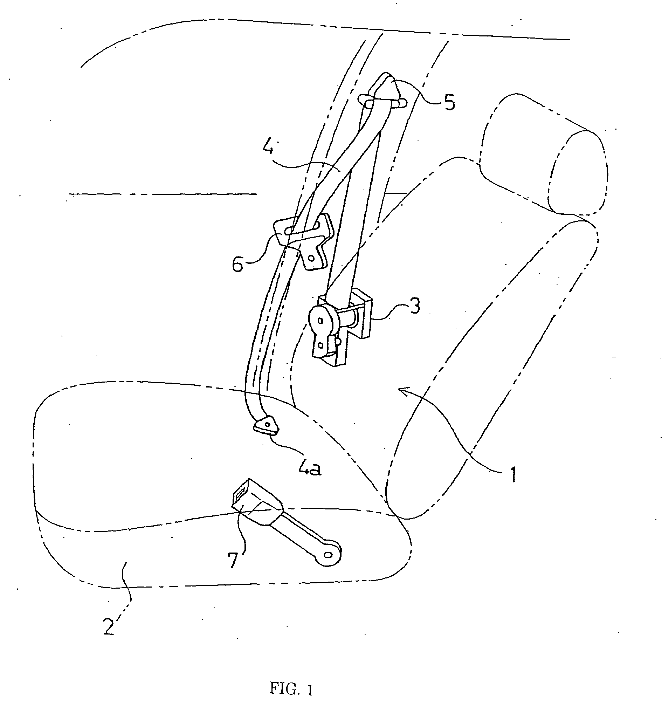

Fig. 1 is an illustration schematically showing a seat belt apparatus comprising a seat belt retractor as an embodiment according to the present invention.

As shown in Fig. 1, the seat belt apparatus 1 of this embodiment comprises, similarly to a conventionally known seat belt apparatus of a three-point type using a seat belt retractor, a seat belt retractor 3 which is fixed to a vehicle body near a vehicle seat 2, a seat belt 4 which is withdrawn from the seat belt retractor 3 and is provided at its end with a belt anchor 4a fixed to a vehicle floor or the vehicle seat 2, a deflection fitting 5 for guiding the seat belt 4 withdrawn from the seat belt retractor 3 toward an occupant's shoulder, a tongue 6 which is slidably supported by the seat belt 4 guided by and extending from the deflection fitting 5, and a buckle 7 which is fixed to the vehicle floor or the vehicle seat 2 and to which the tongue 6 can be inserted and detachably latched.

The seat belt retractor 3 of this embodiment comprises the aforementioned basic components, for example, of the seat belt retractor having the ELR function with the seat belt sensor and the ALR function disclosed in JP2001-213275A, but not shown. Since the basic components and actions of the seat belt retractor 3 are conventionally known, brief description about components relating to an end lock preventive device 9 of the present invention will be made and detail description about other components will be omitted.

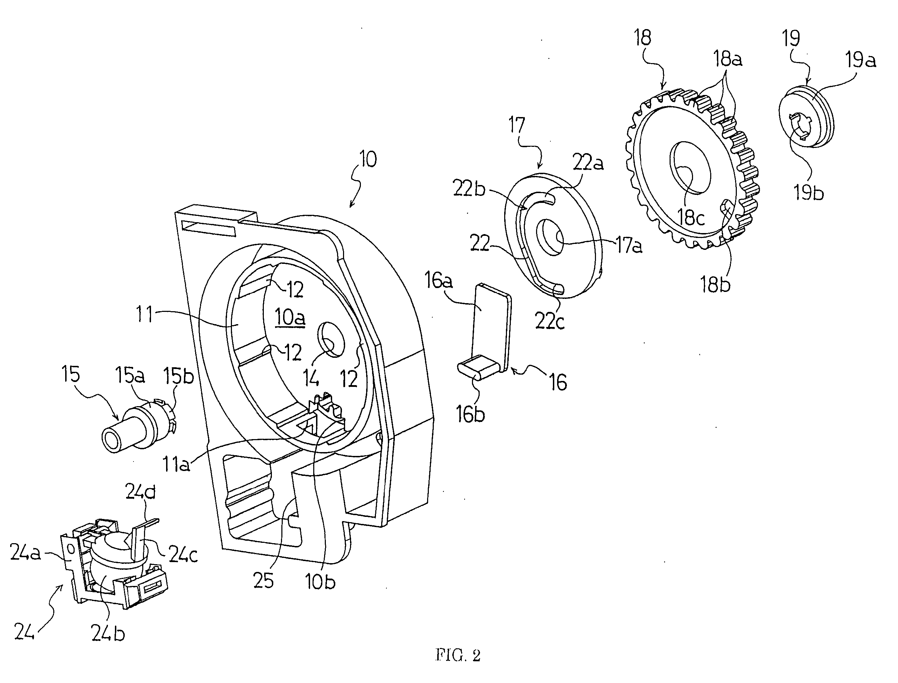

As shown in Fig. 2, Fig. 3, and Fig. 5, a retainer 10 is provided at its spool side with an accommodating portion 25 for accommodating a vehicle sensor 24. The vehicle sensor 24 has the same components as those of a conventionally known vehicle sensor, for example, the vehicle sensors disclosed in JP2001-213275A and JPH09-150712A described above. That is, the vehicle sensor 24 has a casing 24a, an inertia ball 24b which is accommodated in the casing 24a and is actuated by a large deceleration such as the event of an emergency, an actuator 24c which is pivotally mounted to the casing 24a and is actuated by the actuation of the inertia ball 24b, and an engaging pawl 24d which is formed at an end of the actuator 24c and is engaged with annular ratchet teeth 27 formed around the outer periphery of a ratchet wheel (locking gear) 26 by the actuation of the actuator 24c.

The locking gear 26 has also conventionally known components. The locking gear 26 rotates together with the spool 8 when the locking gear is not in operation, and moves a locking pawl 28 as locking means because a rotational difference is generated relative to the spool 8 so as to engage the locking pawl 28 with internal teeth 30 of the frame 29 when the locking gear is in operation, thereby locking (preventing) the spool 8 from rotating in the belt withdrawing direction. The locking gear 26 is arranged coaxially with the spool 8.

Now, the end lock preventive device 9 as a feature of the present invention will be described.

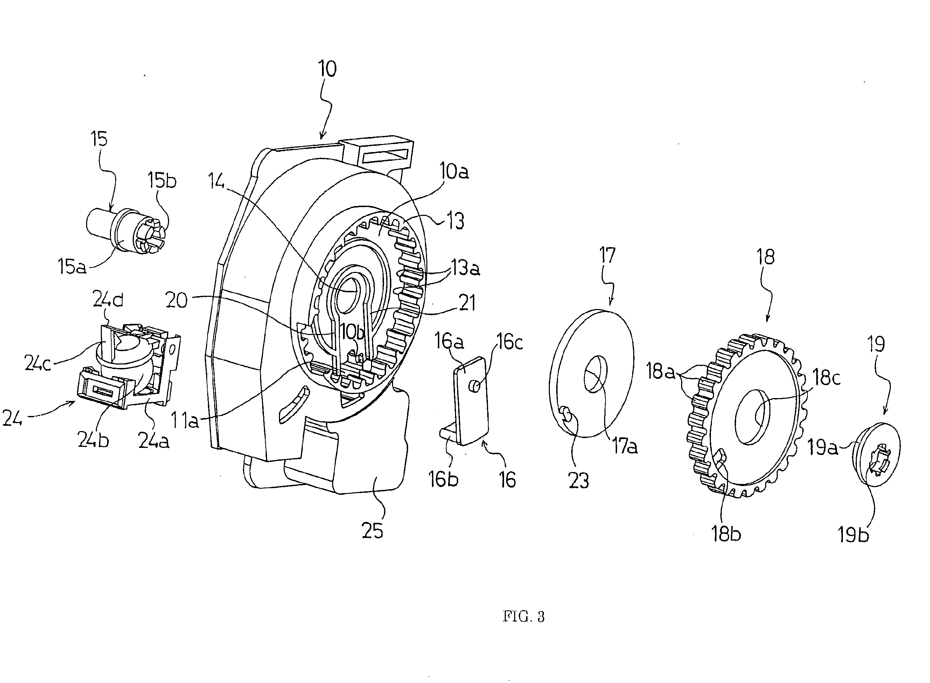

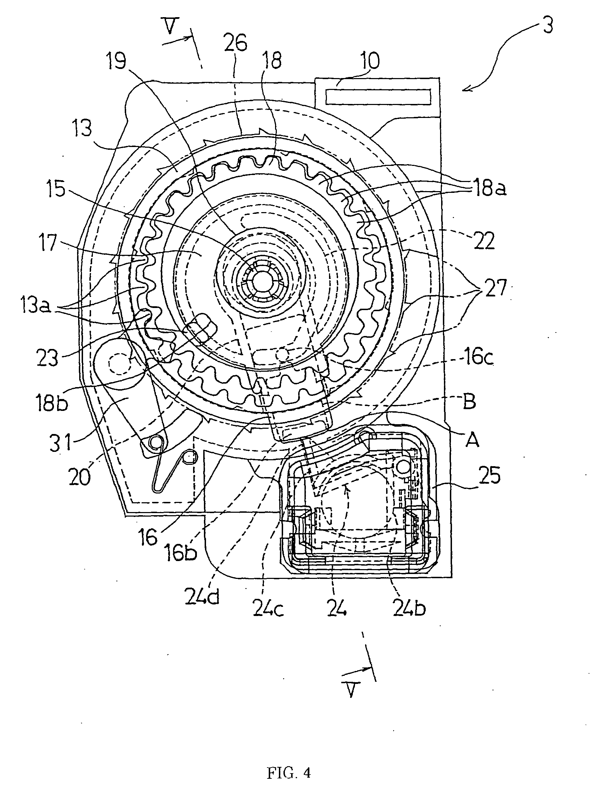

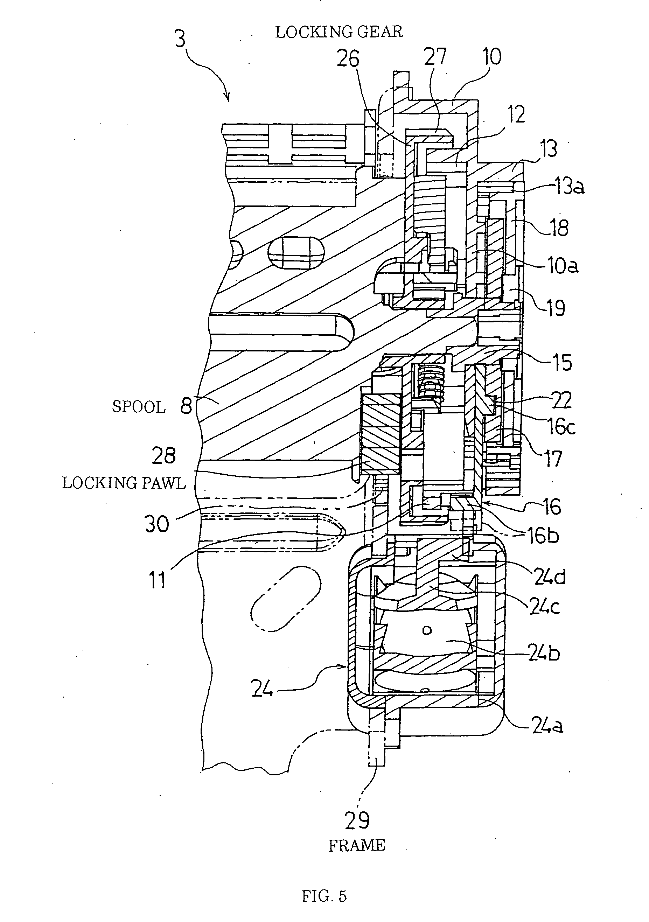

Fig. 2 is an exploded perspective view showing parts of the seat belt retractor comprising the end lock preventive device, Fig. 3 is an exploded perspective view of the same parts as shown in Fig. 2 but taken in an opposite direction of the seat belt retractor, Fig. 4 is a side view of the seat belt retractor, and Fig. 5 is a sectional view taken along a line V-V in Fig. 4.

As shown in Fig. 2 through Fig. 5, the seat belt retractor 3 of this embodiment comprises a retainer 10 attached to a side wall of the frame where the vehicle sensor is disposed. As shown in Fig. 2 and Fig. 5, on the spool 8 side (left side in Fig. 2) of the side wall 10a of the retainer 10, an annular projecting portion 11 projects in the axial direction. The annular projecting portion 11 is arranged coaxially with the spool 8 and is provided around its inner periphery with a predetermined number of ratchet teeth 12 which are formed at equal intervals in the circumferential direction. The ratchet teeth 12 compose a part of the seat belt sensor. When the seat belt is rapidly withdrawn, an inertia body (not shown) is actuated so that the engaging pawl of the inertia body is engaged with one of the ratchet teeth 12. As the engaging pawl of the inertia body is engaged with the ratchet teeth 12, the rotation in the belt withdrawing direction of the spool is locked, thereby preventing the seat belt 4 from being withdrawn.

As shown in Fig. 3 and Fig. 5, on an opposite side (right side in Fig. 3) of the side wall 10a of the retainer 10, a ring gear 13 having internal teeth 13a projects in the axial direction. The ring gear 13 is arranged coaxially with the spool 8 and the annular projecting portion 11.

Further, a through hole 14 is formed in the side wall 10a of the retainer 10 inside the annular projecting portion 11 and the ring gear 13 and coaxially with the annular projecting portion I and the ring gear 13. A bush 15, which is fitted to the spool such that the bush 15 rotates together with the spool, is inserted into the through hole 14.

As shown in Fig. 2, Fig. 3 and Fig. 5, on the side of the side wall 30a of the retainer 30 opposite the spool side, a stopper 16, a stopper control disk 17, a control ring 18 (corresponding to the control member of the present invention), and an eccentric disk 19 are arranged in the axial direction in this order from the retainer 10 side.

The stopper 16 comprises a supporting guide portion 16a and an arcuate stopper portion 16b which is supported by the supporting guide portion 16a and extends perpendicularly to the supporting guide portion 16a. Formed on the supporting guide portion 16a is a pin-like cam follower 16c. As shown in Fig. 3, formed on the side of the side wall 10a of the retainer 10 opposite the spool 8 side are a pair of guide rails 20, 21 which extend in the radial direction of the ring gear 13 and which are spaced from each other by a predetermined distance. The supporting guide portion 16a is disposed between the guide rails 20, 21 such that the supporting guide portion 16a is slidable in the radial direction of the ring gear 13 relative to the side wall 10a while being guided by the guide rails 20, 21. That is, the stopper 16 is movable in the radial direction of the spool 8 and the locking gear 26.

The side wall 10a is provided with an opening 10b passing therethrough in the axial direction and the annular projecting portion 11 is provided with an opening 11a which is formed at a position corresponding to the opening 10b to pass therethrough from the inside to the outside of the annular projecting portion 11. The stopper portion 16b is inserted through the opening 10b to enter the annular projecting portion 11 and can project outside the annular projecting portion 11 as shown in Fig. 4 and Fig. 5.

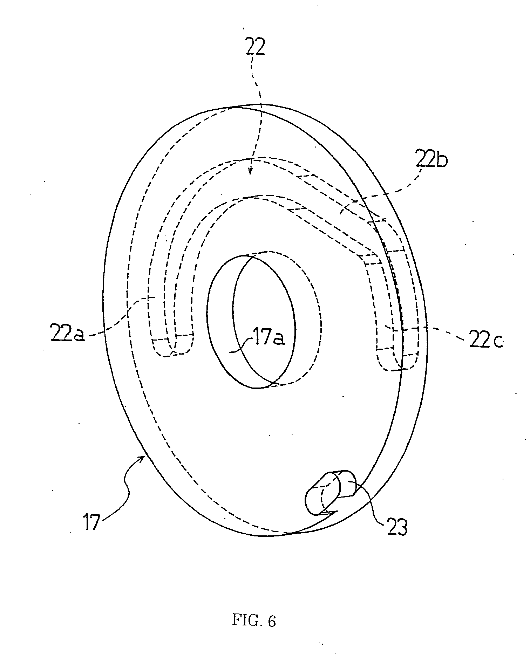

As shown in Fig. 2, Fig. 5 and Fig. 6, the stopper control disk 17 has a cam groove 22 which is formed in a surface facing the stopper 16. The cam groove 22 comprises an arcuate retraction groove portion 22a extending along a part of a circle which is coaxial with the stopper control disk 17 and has a relatively small diameter, a linear groove portion 22b extending tangentially from the arcuate retraction groove portion 22a, and an arcuate protraction groove portion 22c extending from a contact with the linear groove portion 22b along a part of a circle which is coaxial with the stopper control disk 17 and has a diameter larger than the diameter of the circle of the arcuate retraction groove portion 22a. Further, a circular through hole 17a is formed in the central portion of the stopper control disk 17 and is coaxial with the stopper control disk 17. The circular through hole 17a is rotatably supported by a supporting portion 15a of the bush 15. Further, an arcuate connecting projection 23 is formed on the surface of the stopper control disk 17 on the side opposite to the side where the cam groove 22 is formed.

The control ring 18 has external teeth 18a which mesh with the internal teeth 13a of the ring gear 13 and an arcuate connecting hole 18b. The length in the radial direction of the arcuate connecting hole 16b is set to be larger than the thickness (length) in the radial direction of the stopper control disk 17 (*sic*). By inserting the connecting projection 23 of the stopper control disk 17 into the connecting hole 18b, the control ring 18 and the stopper control disk 17 are connected in the rotational direction. In this case, since the control ring 18 eccentrically rotates relative to the spool 8 while the stopper control disk 17 coaxially rotates relative to the spool 8 as will be described later, the stopper control disk 17 *(sic)* is adapted to be slidable in the radial direction relative to the connecting hole 18b. Formed in the central portion of the control ring 18 is a circulate through hole 18c which is coaxial with the control ring 18.

The eccentric disk 19 has a supporting surface 19a around the outer periphery thereof which is formed to have a circular shape. The eccentric disk 19 has a connecting hole 19b which is formed at a position eccentric from the center of the supporting surface 19a of the eccentric disk 19. The through hole 18c of the control ring 18 is fitted onto and supported all around its surface by the supporting surface 19a in such a manner that the control ring 18 and the supporting surface 19a are slidable relative to each other. The connecting portion 15b of the bush 15 is fitted into and connected to the connecting hole 19b in such a manner that the bush 15 and the eccentric disk 19 can not rotate relative to each other. Therefore, the eccentric disk 19 is rotated by the rotation of the spool and the control ring 18 is eccentrically rotated by the rotation of the eccentric disk 19. In addition, the stopper control disk 17 is rotated by the eccentric rotation of the control ring 18 and the stopper 16 is moved in the radial direction of the locking gear 26 by the rotation of the stopper control disk 17.

When the cam follower 16a (*sic*) of the stopper 16 is located in the arcuate protraction groove portion 22c (*sic*) of the cam groove 22 of the stopper control disk 17, the seat belt 4 is withdrawn by an amount exceeding a predetermined withdrawing amount for the normal belt wearing. The arcuate protraction groove portion 22c (*sic*) is set to have a predetermined length in the arcuate direction, whereby the cam follower 16a (*sic*) is located in the arcuate protraction groove portion 22c (*sic*) before the maximum amount of the seat belt 4 is withdrawn. Therefore, when the maximum amount or substantially the maximum amount of the seat belt 4 is withdrawn from the spool biased by the biasing means, the cam follower 16a (*sic*) is positioned in the arcuate protraction groove portion 22c (*sic*).
When the cam follower 16a (*sic*) of the stopper 16 is located in the linear groove portion 22b of the cam groove 22, the seat belt 4 is withdrawn by an amount corresponding to the predetermined amount for the normal belt wearing.

When the cam follower 16a (*sic*) of the stopper 16 is located in the arcuate protraction groove portion 22c of the cam groove 22 of the stopper control disk 17, the maximum amount of the seat belt 4 is wound. The arcuate protraction groove portion 22c is set to have a predetermined length in the arcuate direction, whereby the cam follower 16a (*sic*) is located in the arcuate protraction groove portion 22c even when the seat belt 4 is not maximally wound for some reason so that the winding is completed in a state that the winding amount is slightly smaller than the normal winding amount. Therefore, when the maximum amount or substantially the maximum amount of the seat belt 4 is wound onto the spool biased by the biasing means, the cam follower 16a (*sic*) is located in the arcuate protraction groove portion 22c of the cam groove 22.
In the seat belt retractor 3 of this embodiment, the end lock preventive device 9 is composed of the stopper 16, the control disk 17, and the control ring 18.

Hereinafter, the action of the end lock preventive device 9 of the seat belt retractor 3 of this embodiment will be described.
When the seat belt 4 is not used, the maximum amount of the seat belt 4 is wound onto the spool. In this state, the cam follower 16a (*sic*) is located in the arcuate protraction groove portion 22c. When the cam follower 16a (sic) is located in the arcuate protraction groove portion 22c, the stopper 16 is maximally pressed outwards so that the stopper portion 16b of the stopper 16 is thus located at an outer-side position A, shown by solid line in Fig. 4, outside the ratchet teeth 27 of the locking gear 26 shown by two-dot chain lines in Fig. 4.

In this state, even when the actuator 24c of the vehicle sensor 24 is actuated so that the engaging pawl 24d at its tip end moves toward the ratchet teeth 27, the engaging pawl 24d comes in contact with the stopper portion 16b and is thus prevented from moving so that the engaging pawl 24d can not move to such a position where it can be engaged with the ratchet teeth 27. That is, the engaging pawl 24d of the actuator 24c can not be engaged with the ratchet teeth 27 of the locking gear 26. Therefore, the outer-side position A of the stopper portion 16b is an engagement preventing position where the engaging pawl 24d of the vehicle sensor 24 is prevented from being engaged with the ratchet teeth 27 of the locking gear 26.

As the seat belt 4 is withdrawn from the state that the maximum amount of the seat belt 4 is wound, the spool rotates in the withdrawing direction. As the eccentric disk 19 is rotated because of the rotation of the spool, the external teeth 18a of the control ring 18 are rotated to sequentially mesh with the internal teeth 13a of the ring gear 13. Therefore, the speed of the control ring 18 is largely reduced so that the control ring 18 eccentrically rotates slowly. By the eccentric rotation of the control ring 18, the stopper control disk 17 is rotated slowly.

Then, the cam follower 16a (*sic*) enters into the linear groove portion 22b from the arcuate protraction groove portion 22c of the cam groove 22, whereby the stopper 16 is rapidly pulled. Accordingly, the stopper portion 16b of the stopper 16 is located at a position inside the root of the ratchet teeth 27 of the locking gear 26. Therefore, when the actuator 24c of the vehicle sensor 24 is actuated, the engaging pawl 24d at the tip end of the actuator 24c does not come in contact with the stopper portion 16b and is thus allowed to move to the position where the engaging pawl 24d can be engaged with the ratchet teeth 27 of the locking gear 26. That is, the engaging pawl 24d of the actuator 24c can be engaged with the ratchet teeth 27 of the locking gear 26.

Further, as the withdrawn amount of the seat belt 4 becomes to a belt withdrawing amount for normal wearing, the cam follower 16a (*sic*) is located in the linear groove portion 22b or the arcuate retraction groove portion 22a. In this case, the stopper portion 16b of the stopper 16 is further pulled to an inner-side position B inside the root of the ratchet teeth 27 of the locking gear 26 as shown by dotted lines in Fig. 4.

In this state, when the actuator 24c of the vehicle sensor 24 is actuated so that the engaging pawl 24d at its tip end moves toward the ratchet teeth 27, the engaging pawl 24d does not come in contact with the stopper portion 16b and is thus allowed to move to a position where the engaging pawl 24d can be engaged with the ratchet teeth 27 of the locking gear 26. That is, the engaging pawl 24d of the actuator 24c can be engaged with the ratchet teeth 27 of the locking gear 26, thereby exhibiting the function as the ELR function. Therefore, the outer-side (*sic*) position B of the stopper portion 16b is an engagement allowing position where the engaging pawl 24d of the vehicle sensor 24 is allowed to be engaged with the ratchet teeth 27 of the locking gear 26.

As the seat belt 4 which was withdrawn in the belt withdrawing amount for normal wearing is wound onto the spool after cancelling the belt wearing, the eccentric disk 19 is rotated in a direction the reverse of the aforementioned direction by the rotation of the spool in the belt winding direction, whereby the external teeth 18a of the control ring 18 sequentially mesh with the internal teeth 13a of the ring gear 13. Therefore, the speed of the control ring 18 is largely reduced so that the control ring 18 eccentrically rotates slowly in the reverse direction. By the eccentric rotation of the control ring 18, the stopper control disk 17 is rotated slowly in the reverse direction.

Then, the cam follower 16a (*sic*) moves from the arcuate retraction groove portion 22a or the linear groove portion 22b toward the arcuate protraction groove portion 22c. As substantially the maximum amount of the seat belt 4 is wound onto the spool, the cam follower 16a (*sic*) is located in the arcuate protraction groove portion 22c. At this point, the stopper portion 16b of the stopper 16 in the end lock preventive device 9 is located at a position outside the ratchet teeth 27 of the locking gear 26 as shown by two-dot chain lines in Fig. 4. As the maximum amount of the seat belt 4 is wound onto the spool, the belt winding operation is completed. At this point, the cam follower 16a (*sic*) is held to be located in the arcuate protraction groove portion 22c. Therefore, even when the actuator 24c of the vehicle sensor 24 is actuated due to impact by the completion of the belt winding operation, the engaging pawl 24d at the tip end of the actuator 24c comes in contact with the stopper portion 16b and is thus prevented from moving the position where the engaging pawl 24d can be engaged with the ratchet teeth 27 of the locking gear 26. Accordingly, since the engaging pawl 24d is prevented by the stopper portion 16b from moving to the engaging position where the engaging pawl 24d can be engaged with the ratchet teeth 27, the engaging pawl 24d of the actuator 24c is engaged with none of the ratchet teeth 27 of the locking gear 26. That is, when the maximum amount of the seat belt 4 is wound onto the spool, the end lock is prevented by the end lock preventive device 9.

As substantially the maximum amount of the seat belt 4 is withdrawn, the mode is switched from the ELR function to the ALR function by the switching arm 31 shown in Fig. 4 according to the control ring 18 similarly to the conventionally known automatic locking mechanism (ALR mechanism). Accordingly, the automatic locking function is performed. As the automatic locking function is completed, the maximum amount of the seat belt 4 is wound onto the spool. The actions of the end lock preventive device 9 are the same as mentioned above.

According to the seat belt retractor 3 and the seat belt apparatus 1 comprising the end lock preventive device 9 of this embodiment, since the stopper 16 for the end lock preventive device 9 is adapted to be movable in the radial direction of the locking gear 26 between the engagement preventing position A and the engagement allowing position B, it is only required to set such that the trajectory of the stopper 16 contains the position where the engaging pawl 24d of the vehicle sensor 24 is engaged with the ratchet teeth 27 of the locking gear 26. Therefore, the trajectory of the stopper 16 can be reduced so as to require reduced space for movement. Moreover, since the stopper 16 is adapted to move simply linearly in the radial direction of the locking gear 26 so that the stopper 16 does not pass between the ratchet teeth 27 and the engaging pawl 24d while rotating in the rotational direction of the locking gear 26, the stopper 16 never interrupt the engaging pawl 24d in the rotational direction of the locking gear 26. Accordingly, the distance between the engaging pawl 24d and the ratchet teeth 27 may be the same as a conventional ELR and ALR, that is, not necessary to be changed. Therefore, the seat belt retractor 3 of this embodiment can be made in a compact size even with the end lock preventive device 9.

In addition, the distance between the engaging pawl 24d and the ratchet teeth 27 is equal to that of a conventional ELR or ALR which has no end lock preventive device 9 for preventing the end lock due to the vehicle sensor 24 so that the moving distance of the engaging pawl 24d between the inoperative position and the operative position is not changed, thereby preventing the increase in size of the vehicle sensor 24 like the conventional seat belt retractor disclosed in JPH09-150712A. Furthermore, even with the end lock preventive device 9, a conventional vehicle sensor can be used as the vehicle sensor 24 of the seat belt retractor 3 of this embodiment without any modification, thereby making the seat belt retractor 3 of this embodiment at low cost.

The end lock preventive action can be stably and smoothly conducted while the function of the vehicle sensor 24 is yet suitably exhibited, thereby improving the reliability of the seat belt retractor 3.

Furthermore, the control ring 18 for the ALR function also functions as a control member rotating the stopper control disk 17, thereby eliminating necessity of a control member exclusive for controlling the stopper control disk 17, i.e. controlling the stopper 16. Therefore, in the seat belt retractor of the ALR type, the number of parts can be further reduced even with the end lock preventive device 9.

Moreover, since the stopper control disk 17 for controlling the stopper 16 for the end lock preventive device 9 and the control ring 18 for the ALR function are separately formed as discrete parts, the seat belt retractor can be flexibly and inexpensively adapted to various layouts with parts of less kinds by combining the stopper control disk 17 and the control ring 18 which are discrete parts even when there are various layouts of the seat belt apparatuses 1.

In addition, since the stopper control disk 17 is rotated by the control ring 18 moved by the rotation of the spool 8, the operation of the stopper 16 is control led by the cam groove 22 of the stopper control disk 17, thereby more stably preventing the end lock with simple structure.

Though the control ring 18 for the ALR function is also used for the end lock preventive device 9 in the aforementioned embodiment, the present invention is not limited thereto and an exclusive member for controlling the operation of the stopper 16 in the end lock preventive device 9 may be employed.

The present invention is not limited to the seat belt retractor having the ELR function and the ALR function as mentioned above and may be applied to a seat belt retractor having only the ELR function.

### Industrial Applicability

The seat belt retractor and the seat belt apparatus of the present invention are suitably used as a seat belt retractor in which end lock likely occurs and which has at least a emergency locking function, and a seat belt apparatus which comprises such a seat belt retractor and restrains an occupant by the seat belt withdrawn from the seat belt retractor.

## Claims

1. A seat belt retractor comprising at least: a spool onto which a seat belt is wound; a locking means which allows the rotation of said spool when it is not in operation and prevents the rotation of said spool in the belt withdrawing direction when it is in operation; a locking gear which has annular ratchet teeth around its outer periphery and which rotates together with said spool when it is not in operation and actuates said locking means when it is in operation because a rotational difference relative to said spool is caused, and a vehicle sensor which has an engaging pawl and which detects a deceleration in the event of an emergency where the deceleration which is larger than that for the normal running acts on a vehicle and engages said engaging pawl to the ratchet teeth of said locking gear to prevent the rotation in the belt withdrawing direction of said locking gear so as to cause the rotational difference between said spool and said locking gear, wherein
a stopper is provided in such a manner that said stopper is movable in the radial direction of said locking gear according to the rotation of said spool between an engagement allowing position where said engaging pawl of said vehicle sensor is allowed to be engaged with said ratchet teeth of the locking gear and an engagement preventing position where said engaging pawl of said vehicle sensor is prevented from being engaged with said ratchet teeth of said locking gear, and wherein
when the maximum amount or substantially the maximum amount of said seat belt is wound onto said spool, said stopper is set to said engagement preventing position.

2. A seat belt retractor as claimed in claim 1, further comprising: a stopper control disk having a cam groove for controlling the movement of said stopper when rotating, and a control member which is actuated by the rotation of said spool to rotate said stopper control disk.

3. A seat belt retractor as claimed in claim 2, further comprising an automatic locking mechanism which is activated when the maximum amount of said seat belt is withdrawn so as to prevent the withdrawal of said seat belt in the course of winding said seat belt after the withdrawal of the maximum amount until the maximum amount of said seat belt is wound, wherein
a control member of said automatic locking mechanism is used also as said control member.

4. A seat belt apparatus comprising at least: a seat belt for restraining an occupant; a seat belt retractor which wind up said seat belt while allowing the withdrawal of said seat belt and is actuated in the event of an emergency to prevent the withdrawal of said seat belt; a tongue slidably supported by said seat belt withdrawn from said seat belt retractor; and a buckle which is attached to a vehicle body or a vehicle seat and to which said tongue can be detachably latched, wherein
said seat belt retractor is a seat belt retractor as claimed in any one of claims I through 3.
